# EUROPEAN PATENT SPECIFICATION

(11) **EP 3 410 059 B1**
(45) Date of publication and mention of the grant of the patent: **27.11.2019**
(21) Application number: 18174149.7
(22) Date of filing: 24.05.2018
(51) Int. Cl.: G01B 3/20, G01B 3/22

(54) **IMPROVED CALIPER**
VERBESSERTE SCHIEBLEHRE
PIED À COULISSE AMELIORÉ

(30) Priority: 30.05.2017 IT 201700059159
(43) Date of publication of application: 05.12.2018
(73) Proprietor: S.C.F. di Colpani Gianfranco e Pier Giuseppe S.n.c., Caravaggio (BG) (IT)
(72) Inventor: Colpani, Pier Giuseppe, 24043 Caravaggio (BG) (IT)
(74) Representative: Bruni, Giovanni

(56) References cited:
- GB-A- 1 058 398
- JP-A- 2006 046 971
- US-A- 5 490 335
- US-A1- 2005 235 516
- US-A1- 2014 007 445

## Description

Form of the present invention is an improved indicator caliper measuring instrument, specifically an innovative indicator caliper suitable for measuring (with precision of the tenth, twentieth, fiftieth and hundredth of a millimeter), for example the width of an object, the distance between two flat faces in a concavity, the depth of a furrow or a threaded or non-threaded diameter.

Different types of calipers are known to the state of the art, mainly, depending on the reading system, the caliper can be classified as a vernier caliber with a main scale on the body, typically millimetric, in which the fractions are read thanks to a vernier realized on the slider; dial caliper with a main scale on the body, typically millimetric, in which the fractions are read thanks to a watch dial mounted on the slider; o digital caliper without main scale on the body, the reading is performed directly on a digital electronic indicator, mounted on the cursor.

The known calipers of this type have a body on which a millimeter scale is normally engraved, and a slider on which is mounted a clock dial moved by the movement of the slider with kinematisms similar to those used for the indicators. Therefore, millimeters are read on the fixed scale, on the dial the relative fractions. However, not all types of measurements that are normally carried out are easy if performed with known calipers, since often such instruments can be difficult to handle or, depending on the measurement to be carried out, it may be difficult to read on the dial or digital indicator and in any case dependent on the user's hand.

There is therefore the need to obtain an extremely versatile indicator measuring instrument, which can facilitate measurements in multiple positions.

However, indicator calipers which overcome the aforementioned drawbacks are not known to the state of the art.

GB 1058398 discloses a caliper gauge for checking measurements of articles comprising a graduated rod or bar on which a slidable shank is arranged, and a dial gauge so mounted on an extension of the rod or bar that its plunger engages a pivoted lever.

The aim of the proposed invention is therefore to provide a comparative caliper that is not cumbersome and extremely versatile.

A further object of the invention is to provide an instrument with a simplified form, which is more economical and can be completely dismantled in all its parts in order to facilitate maintenance, repairs or replacement of worn elements.

The predetermined objects of the invention are achieved by means of the caliper object of the present invention comprising two arms and a rod, where the arm integral with the indicator is able to rotate with respect to the horizontal axis of the rod along a circumference having a radius r equal to the length between the center of the fulcrum of the pin secured to the rod and the point of contact on the arm itself.

Advantageously, the indicator can assume different positions so that it is always clearly visible, making the different types of measurements to be carried out as far as possible. Furthermore, the caliper according to the present invention can be configured to include all known reading systems.

These and further advantages will result from the detailed description of the invention which is the object of the present invention which will refer to the following tables in which an exemplary non-limiting embodiment of the invention will be shown.

In particular:
- figure 1 is a schematic overall representation of the indicator caliper according to the present invention;
- figures 2, 3 and 4 show three schematic representations of the caliper with a different positioning of the indicator;
- figure 5 shows the indicator caliper according to a first embodiment of the present invention;
- figure 6 shows the indicator caliper according to a second embodiment of the present invention;
- figure 7 shows an exploded detail of the cursor with movable fulcrum of the caliper according to a first embodiment;
- figure 8 shows an exploded detail of the cursor with pivot pivoted to the caliper shaft, according to a further embodiment;
- figure 9 shows the scheme of the forces acting on a known caliper;
- figure 10 shows the scheme of the forces acting on a indicator caliper according to the present invention,
- figure 11 shows a front view of the indicator caliper according to a further embodiment of the present invention;
- Figure 12 shows a top view of the indicator caliper of Figure 11;
- Figures 13a, 13b and 13c show three different positions of the tip on the indicator caliper.

With reference to the above figures, the indicator caliper 100 according to the present invention comprises a rod 1, a first fixed arm 2 at the end of which there is a first probe 2', a second movable arm 3 at the end of which there is a second probe 3' and an indicator arm 5 pivoted with said first or second arm 2, 3 to the rod 1 or to the slider 8 by means of a pin 6 which acts as a fulcrum and an indicator 4. Said first and second arms 2, 3 can be alternatively configured together with the arm 5 of the indicator caliper as a lever device 20,30 capable of rotating around the pin 6.

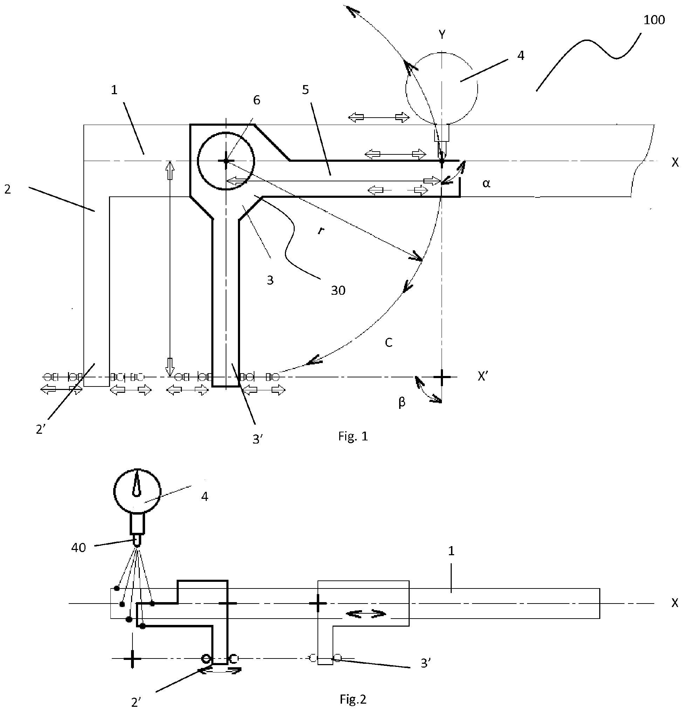

As shown in Figure 1, the arm 3 and the arm 5 of the indicator are able to rotate along a circumference C. At least one of the probes 2', 3' and the indicator 4 are positioned so that the respective axes are orthogonal respectively the axis of at least one of the two arms 2, 3 and the axis of the arm 5 of the indicator caliper.

The Y-axis of the indicator 4 (in Figure 1) is not parallel to the horizontal center line X of the rod 1, but forms an angle α with 0 ° <α <180 °. Moreover, said Y axis is not parallel to the X axis passing through the probes 2 ', and thus forms an angle β with 0° <β <180°.

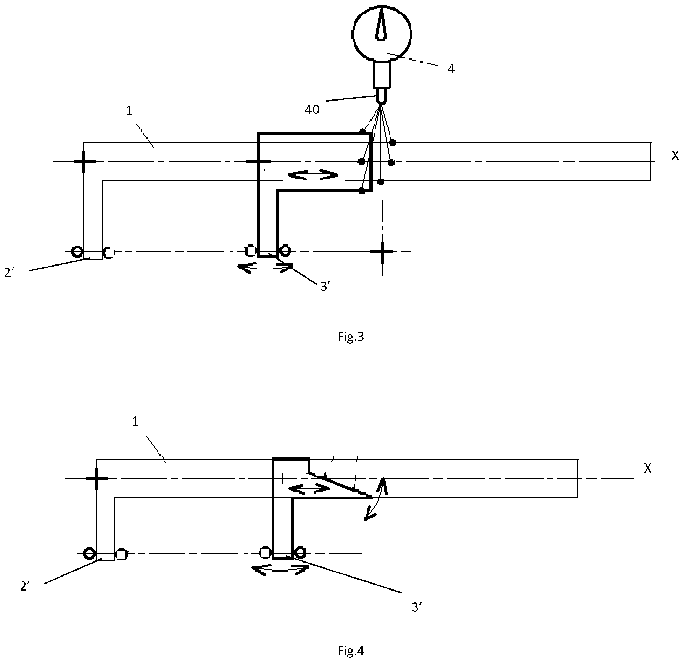

As can be seen from Figures 2 and 3, the contact point of the rod 40 of the indicator 4 is placed indifferently on a plane of the rod 1 or on a plane of the lever device 20, 30 connected thereto. The indicator arm 5 length may be greater, shorter than or equal to the length of the probe arm 2 ', 3'.

The fulcrum of the pin 6 can be constrained to the rod 1 or to a slider 8, 9 and therefore can be movable and move along the longitudinal center axis X of the rod 1 to be locked at the desired point.

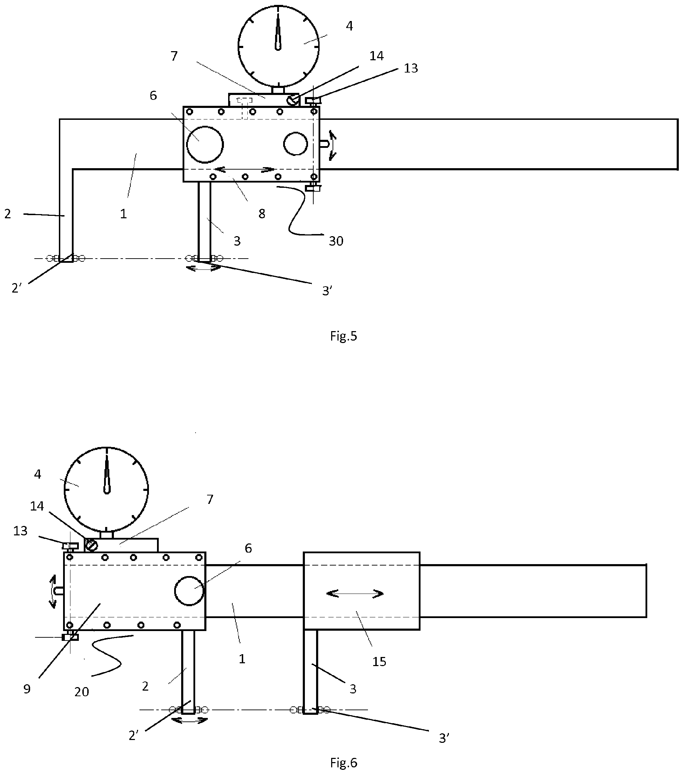

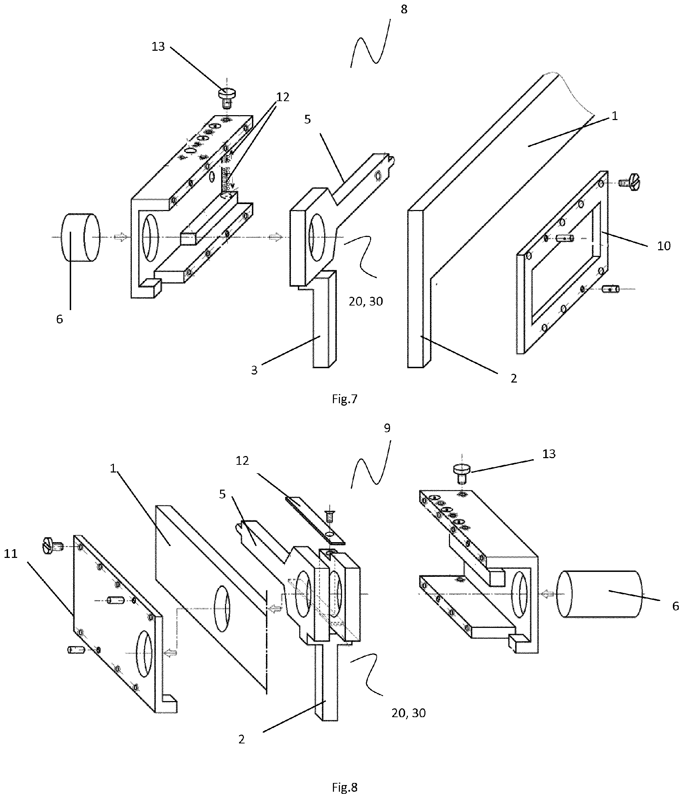

As shown in Figures 7 and 8, the slider 8, 9, comprising a closing plate 10, 11, is configured to contain, inside it, the rod 1, at least one of the arms 2, 3, the arm 5 of the indicator and elastic means 12 which allow the movement of the arms 2 or 3 and of the arm 5 along a circumference C. On the outer surface of the slider 8, 9, 15 there are adjustment means 13 for the preloading of the elastic means 12, and indicator support 7. According to a first embodiment of the invention object of the present invention and, as shown in figure 5, a first arm or lever 2 is fixed at first end of the rod 1 of the caliper 100, while the second arm or lever 3, inside a slider 8, is slidably positioned along the rod 1. The indicator 4 is fixed, through an indicator support 7, to the upper portion of the arm 3 by fastening means 14, for example screws.

According to a second embodiment of the invention object of the present invention and, as shown in Figure 6, a first arm or lever 2 is pivoted with the pin 6 at one end of the rod 1 of the indicator caliper 100, while the second arm or lever 3, part of a conventional slider 15, is positioned slidably along the rod 1. The indicator 4 in this case is fixed, through an indicator support 7, to the upper portion of the arm 2 by fixing means 14, for example screws.

As can be seen in Figures 7 and 8, the lever device 20, 30 assumes two different asymmetrical or symmetrical configurations. In particular, the asymmetric configuration is implemented for reasons of space reduction.

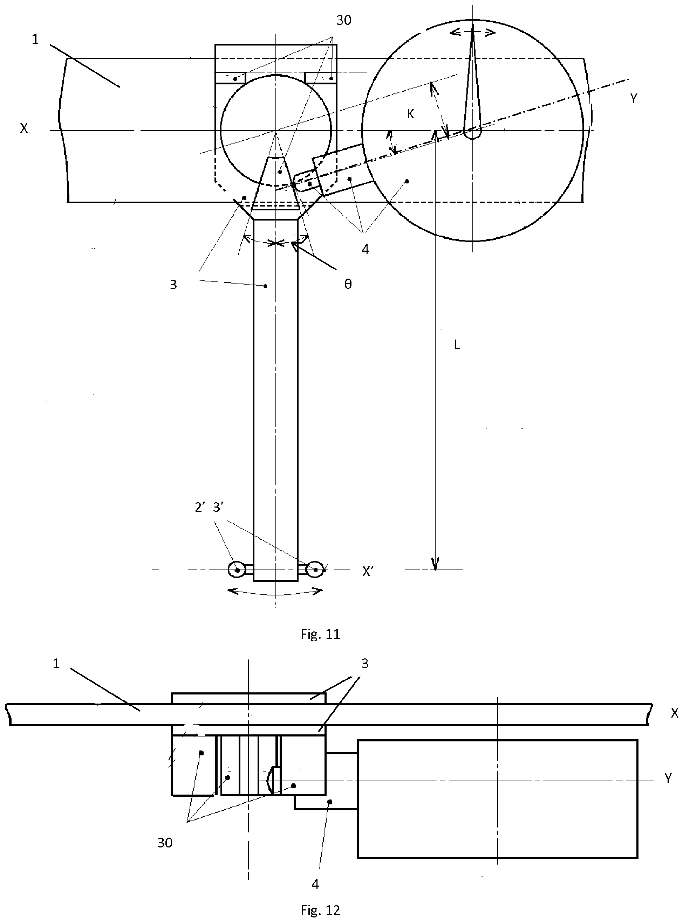

According to a further embodiment of the invention object of the present invention and, as shown in figure 11 and figure 12, the indicator caliper 100 is provided with a lever 3 which comprises a plurality of protuberances 30 (which represent many small arms 5 of the indicator caliper) having different angles and positions. In this case, the indicator caliper 100 has an arm 5 with a length K shorter than the length L of the probes 2 ', 3'. This solution brings together some elements that make up the mechanism around the pin / fulcrum, further reducing the overall dimensions and thus favoring accessibility in confined spaces. Moreover, this solution offers the advantage of providing a greater number of alternatives for positioning the indicator 4, and the possibility of mounting on the same indicator caliper more than one indicator simultaneously in order to minimize the typical hysteresis error of the indicators.

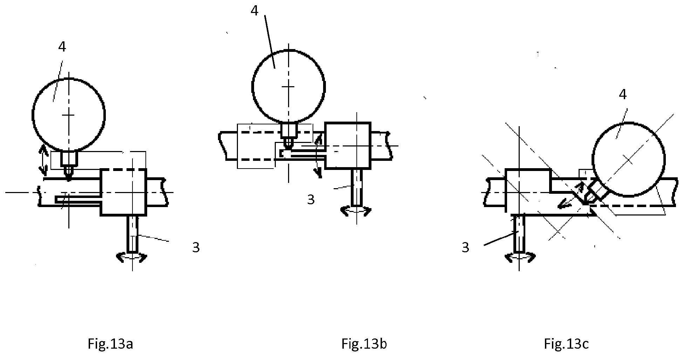

Moreover, as shown in Figures 13a, 13b and 13c, the contact point of the rod 40 of the indicator 4 can advantageously be placed in different positions, for example, directly on the rod 1 of the indicator caliper 100, or on a horizontal or oblique portion of the lever 3.

In addition, the distance between the center of the pin 6 and the Y axis of the indicator is less than the distance between the center of the pin 6 and the axis X 'of the probes.

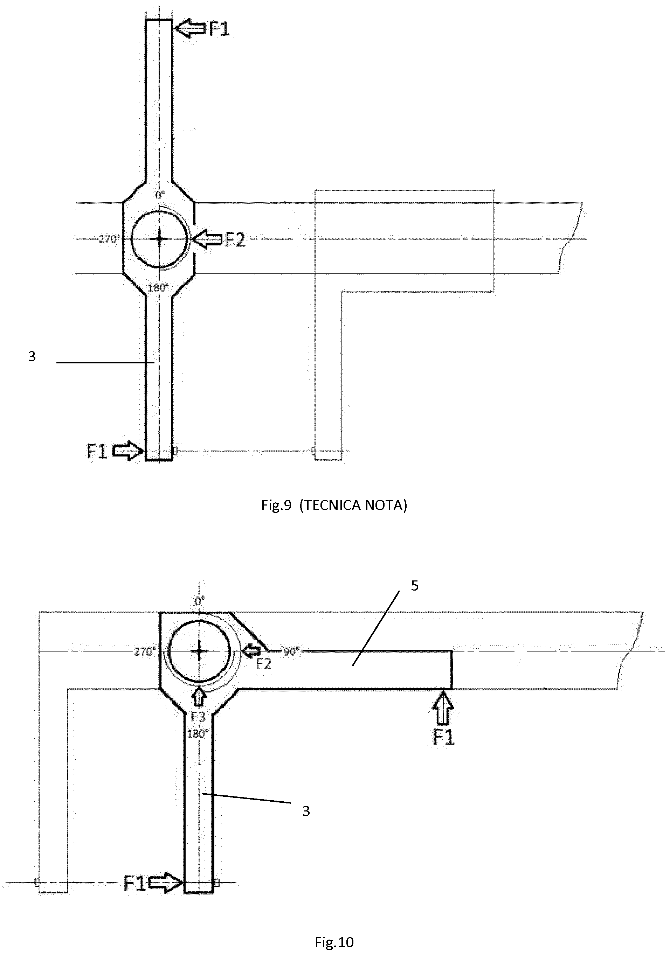

The advantages of the indicator caliper according to the present invention are evident by analyzing Figures 9 and 10 in which the forces acting respectively on a known type caliper and on the caliper according to the invention are schematised.

In the known type of caliper, the preload force F1 transmitted by the preload to the probes and the reaction force F2 exerted by the pin or fulcrum are parallel to one another and therefore the rigidity of the tool is guaranteed only along the longitudinal axis. The area of action of force F2 extends over an angle between 0° and 180 ° as well as the contact area. Furthermore, the projecting upper arm of the known instrument is cumbersome, not very aesthetic and weak.

On the other hand, in the caliper according to the invention, the preload force F1 breaks down according to two orthogonal components F2 + F3. The action zone of F2 is between 0 ° and 180 °, while the action zone of F3 is between 90 ° and 270 °. Therefore, the contact zone of the reaction forces extends from 0 ° to 270°. Consequently, the overall surface where the preload is distributed is higher than that of the known caliper, thus obtaining less wear and greater precision. The orthogonal action of the forces F2 + F3 helps to stiffen the mechanism, being the rigidity guaranteed along the two orthogonal axes of the forces F1, F2, F3. Therefore, the mechanism and the tool are very balanced between them. Furthermore, the assembly is more linear, robust and compact.

Although at least one exemplary embodiment has been presented in the summary and in the detailed description, it must be understood that there exists a large number of variants falling within the scope of protection of the invention. Furthermore, it must be understood that the embodiment or the embodiments presented are only examples that do not intend to limit in any way the scope of protection of the invention or its application or configurations. Rather, the brief description and the detailed description provide the skilled man with a convenient guide for implementing at least one exemplary embodiment, as it is clear that numerous variations can be made in the function and assembly of the elements described therein, without departing from the scope of protection of the invention as established by the attached claims.

## Claims

1. Indicator caliper (100) comprising a rod (1), a first fixed arm (2) at the end of which there is a first probe (2'), a second movable arm (3) at the end of which there is a second probe (3'), an arm (5) of the indicator caliper (100) pivoted with said first or second arm (2, 3) to the rod (1) by means of a pin (6) and an indicator (4) constrained to the arm (5) of the indicator caliper, said indicator caliper (100) being **characterized in that** said first arm (2) and said second arm (3), are alternately configured together with the arm (5) of the indicator caliper as a lever device (20, 30) able to rotate around the pin (6).

2. Caliper (100) according to claim 1, **characterized in that** said first arm (2) is fixed to a first end of the rod (1), the second arm (3) is slidably positioned along the rod (1) and an indicator (4) is fixed to the upper portion of the arm (3) through fastening means (14).

3. Caliper (100) according to claim 1, **characterized in that** said first arm (2) is pivoted on first end of the rod (1), the second arm (3) is slidably positioned along the rod (1) and the indicator (4) is fixed to the upper part of the arm (2) through fastening means (14).

4. Caliper (100) according to claim 1 or 3, wherein at least one of the probes (2', 3') and an indicator (4) are positioned such that the respective axes are orthogonal to the axis of at least one of the two arms (2, 3) and to the axe of the arm (5) of the indicator caliper (100).

5. Caliper (100) according to any of the claims from 1 to 4, wherein the axis (Y) of the indicator (4) forms with the horizontal centerline axis (X) of the rod (1) an angle α with 0 ° <α <180 °.

6. Caliper (100) according to any of the claims from 1 to 5, wherein said axis (Y) forms with the axis of the probes (X ') passing through the probes (2', 3') an angle β with 0 ° <β <180 °.

7. Caliper (100) according to any of the claims from 1 to 6, wherein the contact point of the rod (40) of the indicator (4) is placed on a plane of the rod (1) or on a plane of the lever device (20, 30) connected to the rod (1).

8. Caliper (100) according to any of the claims from 1 to 7, wherein the pin (6) is fastened to the rod (1) or to a slider (8, 9, 15) which is movable and moves along the longitudinal axis (X) of the centerline of the rod (1).

9. Caliper (100) according to claim 8, wherein the slider (8, 9) comprises a closing plate (10, 11) and is configured to internally contain the rod (1), at least one of the two arms (2, 3), the arm (5) of the indicator caliper and elastic means (12).

10. Caliper (100) according to claim 9, wherein on the outer surface of the slider (8, 9, 15) there are adjustment means (13) of the preload of the elastic means (12) and indicator support means (7).

11. Caliper (100) according to any of the claims from 1 to 10, **characterized in that** the distance between the center of the pin (6) and the axis (Y) of the indicator is shorter than the distance between the center of the pin (6) and the axis (X') of the probes.

## Patentansprüche

1. Anzeigekaliber (100), umfassend eine Stange (1), einen ersten feststehenden Arm (2), an dessen Ende sich eine erste Probe (2) befindet, und einen zweiten beweglichen Arm (3), an dessen Ende sich eine zweite Probe (3') befindet, einen Arm (5) des Anzeigemessgeräts (100), der mit dem ersten oder zweiten Arm (2, 3) in Bezug auf die Stange (1) mittels eines Stifts (6) und eines Anzeigers (4) drehbar ist, der mit dem Arm (5) des Anzeigemessgeräts integriert ist, wobei das genannte Anzeigemessgerät (100) ist **dadurch gekennzeichnet, dass** der genannte erste Arm (2) und der genannte zweite Arm (3) zusammen mit dem Arm (5) des Anzeigemessgeräts abwechselnd als eine Hebelvorrichtung (20, 30) konfiguriert sind, die sich um den Stift (6) drehen kann.

2. Anzeigekaliber (100) nach Anspruch 1, **dadurch gekennzeichnet, dass** der genannte erste Arm (2) an einem ersten Ende der Stange (1) befestigt ist, der zweite Arm (3) entlang der Stange (1) verschiebbar positioniert ist und ein Anzeiger (4) ist an dem oberen Teil des Arms (3) durch Befestigungsmittel (14) befestigt.

3. Kaliber (100) nach Anspruch 1, **dadurch gekennzeichnet, dass** der genannte erste Arm (2) am ersten Ende der Stange (1) drehbar ist, wobei der zweite Arm (3) gleitend entlang der Stange (1) positioniert ist, und der der Anzeiger (4) ist durch Befestigungsmittel (14) am oberen Teil des Arms (2) befestigt.

4. Kaliber (100) nach Anspruch 1 oder 3, wobei mindestens eines der Proben (2', 3') und ein Anzeiger (4) derart positioniert sind, dass mindestens die jeweiligen Achsen orthogonal zu der Achse von mindestens einem der beiden Arme (2, 3) und in Bezug auf die Achse des Arms (5) des Anzeigekalibers (100) sind.

5. Kaliber (100) nach einem der Ansprüche 1 bis 4, wobei die Achse (Y) des Anzeigers (4) zusammen mit der Mittelachse (X) der Stange (1) einen Winkel α mit 0° < α < 180° bildet.

6. Kaliber (100) nach einem der Ansprüche 1 bis 5, wobei die Achse (Y) mit der Achse der Proben (X'), die durch die Proben (2', 3') verlaufen, einen Winkel β mit 0° < β <180° bilden.

7. Kaliber (100) nach einem der Ansprüche 1 bis 6, wobei der Kontaktpunkt der Stange (40) des Anzeigers (4) auf einer Ebene der Stange (1) oder auf einer Ebene der Hebelvorrichtung (20, 30) liegt, die mit der Stange (1) verbunden ist.

8. Kaliber (100) nach einem der Ansprüche 1 bis 7, bei dem der Stift (6) an der Stange (1) oder an einem beweglichen Gleitelement (8, 9, 15) befestigt ist, das beweglich ist und sich entlang der Längsachse (X) der Mittellinie der Welle (1) bewegt.

9. Kaliber (100) nach Anspruch 8, wobei das Gleitelement (8, 9) eine Verschluss-Platte (10, 11) aufweist und dazu ausgestaltet ist, darin die Stange (1), wenigstens einen der zwei Arme (2, 3), den Arm (5) des Anzeigers und elastische Mittel (12), zu enthalten.

10. Kaliber (100) nach Anspruch 9, **dadurch gekennzeichnet, dass** an der Außenfläche des Gleitelementes (8, 9, 15) Einstellmittel (13) zur Vorspannung des elastischen Mittels (12) und des Stützmittels (7) des Anzeigers, vorgesehen sind.

11. Kaliber (100) nach einem der Ansprüche 1 bis 10, **dadurch gekennzeichnet, dass** der Abstand zwischen der Mitte des Stifts (6) und der Achse (Y) des Anzeigers kürzer ist als der Abstand zwischen der Mitte des Stifts (6) und die Achse (X') der Proben.

## Revendications

1. Calibre indicateur (100) comprenant une tige (1), un premier bras fixe (2) à l'extrémité duquel se trouve un premier spécimen (2), un deuxième bras mobile (3) à l'extrémité duquel se trouve un deuxième spécimen (3'), un bras (5) de la jauge indicatrice (100) pouvant tourner avec ledit premier ou ledit deuxième bras (2, 3) par rapport à la tige (1) au moyen d'une goupille (6) et d'un indicateur (4) faisant partie intégrante du bras (5) de la jauge indicatrice, ladite jauge indicatrice (100) étant **caractérisée en ce que** ledit premier bras (2) et ledit deuxième bras (3) sont configurés en alternance avec le bras (5) de la jauge indicatrice comme un dispositif de levier (20, 30) capable de tourner autour de la goupille (6).

2. Calibre (100) selon la revendication 1, **caractérisé en ce que** ledit premier bras (2) est fixé à une première extrémité de la tige (1), le deuxième bras (3) est positionné de manière coulissante le long de la tige (1) et un indicateur (4) est fixé à la partie supérieure du bras (3) par des moyens de fixation (14).

3. Calibre (100) selon la revendication 1, **caractérisé en ce que** le premier bras (2) est rotatif sur la première extrémité de la tige (1), le deuxième bras (3) est positionné de manière coulissante le long de la tige (1), et l'indicateur (4) est fixé à la partie supérieure du bras (2), par des moyens de fixation (14).

4. Calibre (100) selon la revendication 1 ou 3, dans lequel au moins l'un des spécimens (2', 3') et un indicateur (4) sont positionnés de manière qu'au moins les axes respectifs soient orthogonaux à l'axe d'au moins l'un des deux bras (2, 3), et par rapport à l'axe du bras (5) du calibre indicateur (100).

5. Calibre (100) selon l'une des revendications 1 à 4, dans lequel l'axe (Y) de l'indicateur (4) forme avec l'axe central (X) de la tige (1) un angle α avec 0° < α < 180°.

6. Calibre (100) selon l'une des revendications 1 à 5, dans lequel ledit axe (Y) forme avec l'axe des spécimens (X') qui traverse les spécimens (2', 3') un angle β avec 0°< β < 180°.

7. Calibre (100) selon l'une des revendications 1 à 6, dans lequel le point de contact de la tige (40) de l'indicateur (4) est placé sur un plan de la tige (1) ou sur un plan du dispositif de levier (20, 30) relié à la tige (1).

8. Calibre (100) selon l'une des revendications 1 à 7, dans lequel la goupille (6) est fixée sur la tige (1) ou sur un élément coulissant mobile (8, 9, 15), qui se déplace le long de l'axe longitudinal (X) de la ligne médiane de la tige (1).

9. Calibre (100) selon la revendication 8, dans lequel l'élément coulissant (8, 9) comprend une plaque de fermeture (10, 11) et est configuré pour contenir à l'intérieur la tige (1), au moins l'un des deux bras (2, 3), le bras (5) du calibre indicateur et des moyens élastiques (12).

10. Calibre (100) selon la revendication 9, dans lequel sur la surface externe de l'élément coulissant (8, 9, 15) se trouvent des moyens de réglage (13) pour la pré-charge des moyens élastiques (12) et des moyens de support (7) de l'indicateur.

11. Calibre (100) selon l'une des revendications 1 à 10, **caractérisé en ce que** la distance entre le centre de la goupille (6) et l'axe (Y) de l'indicateur est plus courte que la distance entre le centre de la goupille (6) et l'axe (X') des spécimens.
